# EUROPÄISCHE PATENTSCHRIFT

(11) **EP 3 736 093 B1**
(45) Veröffentlichungstag und Bekanntmachung des Hinweises auf die Patenterteilung: **30.03.2022**
(21) Anmeldenummer: 20172378.0
(22) Anmeldetag: 30.04.2020
(51) Int. Cl.: B27B 17/02, B27B 17/14

(54) **BEFESTIGUNGSVORRICHTUNG ZUM BEFESTIGEN EINES KETTENSÄGENSCHWERTS**
FIXING DEVICE FOR FIXING A CHAINSAW BLADE
DISPOSITIF DE FIXATION PERMETTANT DE FIXER UN GUIDE DE TRONÇONNEUSE

(30) Priorität: 10.05.2019 DE 102019206767
(43) Veröffentlichungstag der Anmeldung: 11.11.2020
(73) Patentinhaber: Robert Bosch GmbH, 70442 Stuttgart (DE)
(72) Erfinder: Groenewald, Robert, Ipswich, IP3 9JY (GB); Ling, Matthew, Stowmarket Suffolk, IP14 5BB (GB); Koncsik, Tamas, 3793 Sajoecseg (HU)

(56) Entgegenhaltungen:
- WO-A1-2010/005485
- WO-A1-2010/105809
- DE-A1-102017 216 870
- US-A1- 2018 281 225

## Beschreibung

### Stand der Technik

Aus EP 2 777 901 A1 ist bereits eine Befestigungsvorrichtung zum Befestigen eines Kettensägenschwerts an einer Antriebseinheit und/oder einem Gehäuse einer Kettensäge, mit zumindest einer Abdeckeinheit, mit zumindest einer Befestigungseinheit zum Befestigen des Kettensägenschwerts und der Abdeckeinheit an der Antriebseinheit und/oder dem Gehäuse und mit zumindest einer Sicherungseinheit, die dazu vorgesehen ist, die Befestigungseinheit zumindest teilweise an der Abdeckeinheit zu sichern, bekannt.

Eine Befestigungsvorrichtung gemäß dem Oberbegriff des Anspruchs 1 ist aus WO 2010/005485 A1 bekannt.

Ferner sei auf die Druckschriften WO 2010/105809 A1 und DE 102017216870 A1 verwiesen.

### Offenbarung der Erfindung

Die Erfindung geht aus von einer Befestigungsvorrichtung zum Befestigen eines Kettensägenschwerts an einer Antriebseinheit und/oder einem Gehäuse einer Kettensäge, mit den Merkmalen des Anspruchs 1.

Erfindungsgemäß ist die Befestigungsvorrichtung dazu vorgesehen, das Kettensägenschwert über die Befestigungseinheit, insbesondere abnehmbar, an der Antriebseinheit und/oder dem Gehäuse der Kettensäge zu befestigen. Bevorzugt ist die Abdeckeinheit dazu vorgesehen, die Befestigungseinheit und/oder das Kettensägenschwert zumindest teilweise zu verdecken, insbesondere in einem Bereich, in dem die Befestigungseinheit und/oder das Kettensägenschwert an der Antriebseinheit und/oder dem Gehäuse der Kettensäge anliegen/anliegt. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist die Antriebseinheit beispielsweise als Elektromotor oder als Verbrennungsmotor ausgebildet. Vorzugsweise ist die Antriebseinheit dazu vorgesehen, eine über das Kettensägenschwert geführte Schneidkette der Kettensäge anzutreiben. Bevorzugt ist die Befestigungsvorrichtung, insbesondere die Befestigungseinheit, dazu vorgesehen, zu einem Wechseln und/oder einer Reinigung des Kettensägenschwerts, der Schneidkette, der Antriebseinheit und/oder des Gehäuses zumindest teilweise gelöst zu werden.

Besonders bevorzugt weist die Befestigungseinheit zumindest einen befestigten Zustand auf, in dem insbesondere die Abdeckeinheit und das Kettensägenschwert über die Befestigungseinheit an der Antriebseinheit und/oder dem Gehäuse befestigt sind. Bevorzugt ist die Sicherungseinheit in dem befestigten Zustand der Befestigungseinheit zumindest teilweise an der Abdeckeinheit und/oder der Befestigungseinheit angeordnet. Bevorzugt weist die Abdeckeinheit zumindest ein, insbesondere genau ein, Abdeckelement auf, welches insbesondere zumindest teilweise korrespondierend zu dem Gehäuse der Kettensäge ausgebildet ist. Vorzugsweise ist das Abdeckelement dazu vorgesehen, zumindest einen Kettenantriebsbereich, insbesondere zumindest ein Antriebsritzel, der Antriebseinheit und/oder des Gehäuses der Kettensäge sowie einen Endbereich des Kettensägenschwerts zumindest größtenteils zu verdecken. Bevorzugt liegt das zumindest eine Abdeckelement in dem befestigten Zustand der Befestigungseinheit zumindest teilweise, insbesondere zumindest größtenteils, an dem Gehäuse der Kettensäge an. Vorzugsweise umschließt das zumindest eine Abdeckelement und das Gehäuse in dem befestigten Zustand der Befestigungseinheit die Befestigungseinheit, die Sicherungseinheit und/oder das Kettensägenschwert zumindest teilweise, insbesondere zumindest größtenteils. Vorzugsweise ist die Sicherungseinheit dazu vorgesehen, zumindest ein Befestigungselement der Befestigungseinheit an der Abdeckeinheit zu sichern. Bevorzugt ist das Befestigungselement, insbesondere zu einem Abnehmen der Abdeckeinheit, insbesondere des Abdeckelements und/oder des Kettensägenschwerts, von der Antriebseinheit, dem Gehäuse und/oder einem, insbesondere mit der Antriebseinheit und/oder dem Gehäuse verbundenen, Gegenbefestigungselement abnehmbar und/oder trennbar ausgebildet. Vorzugsweise ist das Gegenbefestigungselement als Schraubbolzen, als Gewindebolzen o. dgl. ausgebildet. Es ist jedoch auch denkbar, dass das Gegenbefestigungselement eine andere, einem Fachmann als sinnvoll erscheinende Ausgestaltung aufweist. Bevorzugt erstreckt sich das Gegenbefestigungselement aus dem Gehäuse heraus.

Vorzugsweise weist die Befestigungseinheit zumindest eine Befestigungsachse auf, entlang derer das Befestigungselement zum Lösen der Befestigungseinheit von dem Gegenbefestigungselement abnehmbar ist und/oder entlang derer das Befestigungselement zu einem Befestigen der Befestigungseinheit, insbesondere der Abdeckeinheit und/oder des Kettensägenschwerts an der Antriebseinheit und/oder dem Gehäuse, mit dem Gegenbefestigungselement verbindbar ist. Insbesondere ist das Befestigungselement um die Befestigungsachse auf das Gegenbefestigungselement aufschraubbar. Vorzugsweise ist die Befestigungsachse zumindest im Wesentlichen parallel zu einer Mittelachse des Befestigungselements und/oder zu einer Längsachse des Gegenbefestigungselements ausgerichtet. Bevorzugt ist die Befestigungsachse zumindest im Wesentlichen senkrecht zu einer Haupterstreckungsachse des Kettensägenschwerts und/oder der Abdeckeinheit, insbesondere des Abdeckelements, ausgerichtet. Unter einer "Haupterstreckungsachse" eines Objekts, insbesondere des Kettensägenschwerts, der Abdeckeinheit und/oder des Abdeckelements, soll insbesondere eine Achse verstanden werden, welche parallel zu einer längsten Kante eines kleinsten geometrischen Quaders verläuft, welcher das Objekt gerade noch vollständig umschließt. Beispielsweise ist das Befestigungselement als eine Schraubmutter und das Gegenbefestigungselement als ein, insbesondere fest mit der Antriebseinheit und/oder dem Gehäuse verbundener, Schraubbolzen oder Gewindebolzen ausgebildet. Es sind aber auch andere Ausgestaltungen der Befestigungseinheit denkbar, wobei insbesondere das Befestigungselement zu einem Befestigen entlang der und/oder um die Befestigungsachse geführt werden kann. Besonders bevorzugt ist das Befestigungselement in einem befestigten Zustand der Befestigungseinheit entlang der Befestigungsachse getrennt von dem Kettensägenschwert angeordnet.

Darunter, dass "die Sicherungseinheit als eine Kraftschlusseinheit ausgebildet ist" soll insbesondere verstanden werden, dass eine Sicherung der Befestigungseinheit, insbesondere des Befestigungselements, an der Abdeckeinheit, insbesondere dem Abdeckelement, über die Sicherungseinheit zumindest größtenteils, insbesondere ausschließlich, über einen, insbesondere magnetischen und/oder mechanischen, Kraftschluss erfolgt. Vorzugsweise ist die als Kraftschlusseinheit ausgebildete Sicherungseinheit dazu vorgesehen, über einen Kraftschluss mit der Befestigungseinheit, insbesondere dem Befestigungselement, die Befestigungseinheit, insbesondere das Befestigungselement, zumindest teilweise an der Abdeckeinheit zu sichern. Vorzugsweise ist die Sicherungseinheit dazu vorgesehen, das Befestigungselement zumindest axial entlang der Befestigungsachse an dem Abdeckelement zu sichern. Bevorzugt ist das Befestigungselement in einem mittels der Sicherungseinheit gesicherten Zustand relativ zur Sicherungseinheit um die Befestigungsachse drehbar, insbesondere um mehr als 360°. Bevorzugt ist eine kraftschlüssige Verbindung zwischen der als Kraftschlusseinheit ausgebildeten Sicherungseinheit und der Befestigungseinheit, insbesondere dem Befestigungselement, beispielsweise über eine Reibungskraft und/oder eine Magnetkraft ausgebildet. Darunter, dass die als Kraftschlusseinheit ausgebildete Sicherungseinheit "zumindest im Wesentlichen formschlussfrei" ausgebildet ist, soll insbesondere verstanden werden, dass eine Verbindung zwischen der Sicherungseinheit und der Befestigungseinheit unabhängig von einem makroskopischen geometrischen Eingriff der Sicherungseinheit, insbesondere eines Sicherungselements der Sicherungseinheit, und der Befestigungseinheit, insbesondere dem Befestigungselement, erfolgt.

Vorzugsweise ist die als Kraftschlusseinheit ausgebildete Sicherungseinheit dazu vorgesehen, das Befestigungselement in zumindest eine, insbesondere zumindest im Wesentlichen parallel zur Befestigungsachse ausgerichtete, zumindest im Wesentlichen von dem Befestigungselement zur Sicherungseinheit ausgerichtete Richtung mit zumindest einer Sicherungskraft, insbesondere einer Reibungskraft und/oder einer Magnetkraft, zu beaufschlagen. Die Sicherungskraft ist vorzugsweise zumindest gleich einer Gewichtskraft des Befestigungselements und/oder des zumindest einen Abdeckelements. Bevorzugt ist das Befestigungselement unter Aufbringen einer der Sicherungskraft entgegengerichteten Lösekraft von der Abdeckeinheit, insbesondere dem Abdeckelement, lösbar, wobei insbesondere die Lösekraft zumindest größer ist als die Sicherungskraft.

Es ist denkbar, dass die Sicherungseinheit dazu vorgesehen ist, das Befestigungselement bei einer Relativbewegung des Befestigungselements und des Abdeckelements entlang der Befestigungsachse, insbesondere kontinuierlich, mit einer Sicherungskraft zu beaufschlagen, die der Relativbewegung zumindest teilweise entgegengerichtet ist. Zusätzlich ist denkbar, dass die Befestigungseinheit zumindest mehr als ein Befestigungselement und/oder zumindest mehr als ein Gegenbefestigungselement umfasst. Vorzugsweise sind die Befestigungselemente unabhängig voneinander von dem Abdeckelement, der Antriebseinheit, dem Gehäuse und/oder den Gegenbefestigungselementen lösbar. Bevorzugt ist die Sicherungseinheit dazu vorgesehen, die Befestigungselemente unabhängig voneinander an der Abdeckeinheit, insbesondere dem Abdeckelement, zu sichern.

Durch die erfindungsgemäße Ausgestaltung der Befestigungsvorrichtung kann eine vorteilhaft einfache und zuverlässige Sicherung der Befestigungseinheit an der Abdeckeinheit ermöglicht werden, insbesondere da das Befestigungselement formschlussfrei an der Sicherungseinheit gesichert werden kann und dadurch Bedienungsfehler oder Fehler durch Beschädigungen vermieden werden können. Es kann eine vorteilhaft schnelle und einfache Herstellung und Montage des Befestigungselements und der Sicherungseinheit ermöglicht werden. Es kann ein vorteilhaft schneller und einfacher Austausch von Befestigungselementen erfolgen, insbesondere ohne eine teilweise Demontage der Abdeckeinheit. Insbesondere durch die schnelle und einfache Herstellung und Montage, können vorteilhaft geringe Kosten ermöglicht werden. Es kann vorteilhaft eine Abnutzung von Bauteilen der Befestigungseinheit und/oder der Sicherungseinheit zumindest im Wesentlichen vermieden werden, insbesondere da die Sicherung formschlussfrei erfolgen kann.

Des Weiteren wird vorgeschlagen, dass die Sicherungseinheit zumindest ein Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist, wobei das Kraftschlusselement in die Abdeckeinheit, insbesondere in einem, insbesondere dem vorher genannten, an dem Kettensägenschwert anlegbaren Abdeckelement der Abdeckeinheit, eingebettet ist, insbesondere mittels einer kraft- und/oder formschlüssigen Verbindung in einer Ausnehmung des Abdeckelements fixiert ist oder mittels einer stoffschlüssigen Verbindung einteilig mit dem Abdeckelement ausgebildet ist. Bevorzugt ist das Abdeckelement zumindest teilweise aus einem Gummi, einem Kunststoff und/oder aus einem Metall ausgebildet. Vorzugsweise ist das Kraftschlusselement beispielsweise mittels einer Übermaßpassung, mittels eines Gewindes, einteilig mittels eines Spritzgussverfahrens, mittels einer Schweißverbindung, mittels eines Klebemittels o. dgl. an der Abdeckeinheit fixiert. Bevorzugt ist das Kraftschlusselement, insbesondere in dem befestigten Zustand der Befestigungseinheit, an zumindest einer dem Befestigungselement abgewandten Seite des Abdeckelements angeordnet. Vorzugsweise ist das Abdeckelement, insbesondere in dem befestigten Zustand der Befestigungseinheit, zumindest teilweise zwischen dem Befestigungselement und dem Kraftschlusselement angeordnet. Es ist jedoch auch denkbar, dass das Kraftschlusselement mittels einer kraft- und/oder formschlüssigen Verbindung in einer Ausnehmung des Abdeckelements fixiert ist oder mittels einer stoffschlüssigen Verbindung einteilig mit dem Abdeckelement ausgebildet ist und auf einer dem Befestigungselement zugewandten Seite des Abdeckelements angeordnet ist. Bevorzugt ist die Ausnehmung korrespondierend zu einer Grundform des Kraftschlusselements ausgebildet. Alternativ oder zusätzlich ist denkbar, dass das Abdeckelement zumindest ein Halteelement aufweist, welches dazu vorgesehen ist, das Kraftschlusselement an dem Abdeckelement zu befestigen. Beispielsweise ist das Halteelement als ein Magnet, als magnetisierbares Element, als ein Rastelement o. dgl. ausgebildet. Bevorzugt ist das Kraftschlusselement, insbesondere über das Halteelement, lösbar mit dem Abdeckelement verbunden. Durch die erfindungsgemäße Ausgestaltung der Befestigungsvorrichtung kann eine vorteilhaft einfache und sichere Verbindung der Sicherungseinheit, insbesondere des Kraftschlusselements, mit der Abdeckeinheit, insbesondere dem Abdeckelement, ermöglicht werden.

Erfindungsgemäß wird vorgeschlagen, dass die Sicherungseinheit zumindest ein, insbesondere das vorher genannte, Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist, wobei das Kraftschlusselement das Befestigungselement in einem an der Abdeckeinheit, insbesondere einem Abdeckelement der Abdeckeinheit, angeordneten Zustand des Befestigungselements zumindest segmentweise umgibt.

Vorzugsweise ist das Kraftschlusselement, insbesondere in dem befestigten Zustand der Befestigungseinheit und/oder einem gesicherten Zustand des Befestigungselements, entlang zumindest eines Winkelbereichs von insbesondere mehr als 5 °, vorzugsweise mehr als 15° und besonders bevorzugt mehr als 45°, um das Befestigungselement angeordnet, insbesondere entlang einer Umfangsrichtung des Befestigungselements. Bevorzugt verläuft die Umfangsrichtung des Befestigungselements und/oder des Gegenbefestigungselements in einer sich zumindest im Wesentlichen senkrecht zu einer Längsachse des Gegenbefestigungselements und/oder zur Befestigungsachse erstreckenden Ebene. Es ist denkbar, dass die Sicherungseinheit eine Vielzahl von Kraftschlusselementen umfasst, die das Befestigungselement segmentweise umgeben, wobei die Kraftschlusselemente gleichmäßig oder ungleichmäßig verteilt um das Befestigungselement angeordnet sind. Durch die erfindungsgemäße Ausgestaltung der Befestigungsvorrichtung kann eine vorteilhaft gleichmäßige kraftschlüssige Verbindung zwischen der Befestigungseinheit, insbesondere dem Befestigungselement, und der Sicherungseinheit, insbesondere dem Kraftschlusselement, ermöglicht werden. Es kann eine vorteilhaft spielfreie Verbindung zwischen dem Befestigungselement und dem Kraftschlusselement erreicht werden.

Ferner wird vorgeschlagen, dass die Sicherungseinheit zumindest ein, insbesondere das vorher genannte, Kraftschlusselement zu einer, insbesondere zumindest im Wesentlichen formschlussfreien, kraftschlüssigen Verbindung, insbesondere zu einer magnetischen Verbindung, mit zumindest einem Befestigungselement der Befestigungseinheit aufweist, wobei das Kraftschlusselement, insbesondere in zumindest einer sich zumindest im Wesentlichen senkrecht zur Befestigungsachse und/oder der Längsachse des Gegenbefestigungselements erstreckenden Ebene, kreisringförmig ausgebildet ist. Vorzugsweise umschließt das Kraftschlusselement das Befestigungselement und/oder das Gegenbefestigungselement zumindest in dem befestigten Zustand der Befestigungseinheit in zumindest einer sich zumindest im Wesentlichen senkrecht zur Befestigungsachse und/oder der Längsachse des Gegenbefestigungselements erstreckenden Ebene betrachtet zumindest im Wesentlichen vollständig. Vorzugsweise weist das Befestigungselement in der sich zumindest im Wesentlichen senkrecht zur Befestigungsachse und/oder der Längsachse des Gegenbefestigungselements erstreckenden Ebene einen äußeren Umfang auf, der insbesondere korrespondierend zu einem inneren Umfang des kreisringförmigen Kraftschlusselements ausgebildet ist. Bevorzugt liegt das Befestigungselement zumindest in dem befestigten Zustand der Befestigungseinheit, insbesondere in dem gesicherten Zustand des Befestigungselements, mit einer äußeren, insbesondere von der Befestigungsachse abgewandten, Außenfläche zumindest teilweise, insbesondere zumindest größtenteils, an einer, insbesondere dem Befestigungselement zugewandten, Innenfläche des Kraftschlusselements an. Vorzugsweise weist das Kraftschlusselement zumindest teilweise eine zumindest im Wesentlichen hohlringförmige Grundform auf. Durch die erfindungsgemäße Ausgestaltung der Befestigungsvorrichtung kann eine vorteilhaft gleichmäßige kraftschlüssige Verbindung zwischen der Befestigungseinheit, insbesondere dem Befestigungselement, und der Sicherungseinheit, insbesondere dem Kraftschlusselement, ermöglicht werden. Es kann eine vorteilhaft spielfreie Verbindung zwischen dem Befestigungselement und dem Kraftschlusselement erreicht werden.

Des Weiteren wird vorgeschlagen, dass die Sicherungseinheit zumindest ein, insbesondere das vorher genannte, Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist, wobei das Befestigungselement einen Kraftschlussbereich und einen Befestigungsbereich umfasst, wobei eine Länge des Kraftschlussbereichs entlang einer, insbesondere der vorher genannten, Befestigungsachse der Befestigungseinheit größer ist als eine Länge des Befestigungsbereichs. Vorzugsweise ist der Befestigungsbereich ein Bereich, in dem das Befestigungselement mit dem Gegenbefestigungselement verbunden wird. Bevorzugt ist der Kraftschlussbereich ein Bereich, in dem das Befestigungselement, insbesondere zumindest im Wesentlichen formschlussfrei, kraftschlüssig mit dem Kraftschlusselement verbunden wird. Vorzugsweise sind der Kraftschlussbereich und der Befestigungsbereich entlang der Befestigungsachse betrachtet hintereinander angeordnet. Bevorzugt ist ein Verhältnis zwischen der Länge des Befestigungsbereichs und der Länge des Kraftschlussbereichs entlang der Befestigungsachse insbesondere mindestens 1,05, vorzugsweise mindestens 1,1 und besonders bevorzugt 1,2. Vorzugsweise weist das Befestigungselement in dem Befestigungsbereich ein Gewinde oder ein anders geartetes Verbindungsmittel auf. Vorzugsweise liegt das Befestigungselement in dem befestigten Zustand innerhalb des Kraftschlussbereichs an dem Kraftschlusselement an. Bevorzugt ist das Befestigungselement in dem Kraftschlussbereich entlang der Befestigungsachse gewindefrei oder verbindungsmittelfrei ausgebildet. Vorzugsweise weist das Befestigungselement entlang der Befestigungsachse eine gesamte Länge auf, die insbesondere gleich einer Summe aus der Länge des Kraftschlussbereichs und der Länge des Befestigungsbereichs ist. Bevorzugt weist das Befestigungselement in dem Kraftschlussbereich eine zumindest im Wesentlichen hohlringförmige Grundform auf. Vorzugsweise weist das Befestigungselement in dem Befestigungsbereich eine zumindest im Wesentlichen n-eckige Grundform, insbesondere eine zu einem Steckschlüssel korrespondierende Grundform, auf. Bevorzugt weist das Befestigungselement in dem Befestigungsbereich in einer sich zumindest im Wesentlichen senkrecht zur Befestigungsachse erstreckenden Ebene einen größeren maximalen Durchmesser auf wie in dem Kraftschlussbereich, insbesondere in einer sich parallel dazu zumindest im Wesentlichen senkrecht zur Befestigungsachse erstreckenden Ebene. Vorzugsweise weist das Befestigungselement in einer sich zumindest im Wesentlichen senkrecht zur Befestigungsachse erstreckenden Ebene einen maximalen Innendurchmesser des Gewindes und/oder des Verbindungsmittels auf, der gleich, insbesondere kleiner als, ein Innendurchmesser des Befestigungselements innerhalb des Kraftschlussbereichs ist. Vorzugsweise ist die Summe der gesamten Länge des Befestigungselements entlang der Befestigungsachse und einer Stärke des Kettensägenschwerts kleiner als eine gewindefreie oder verbindungsmittelfreie Länge des Gegenbefestigungselements, welche außerhalb der Antriebseinheit und/oder des Gehäuses angeordnet ist. Vorzugsweise weist die Befestigungseinheit zumindest einen unbefestigten Zustand auf, indem insbesondere das Gegenbefestigungselement außerhalb des Befestigungsbereichs des Befestigungselements angeordnet ist. Bevorzugt ist das Kraftschlusselement derart ausgebildet, dass das Befestigungselement in zumindest einem unbefestigten Zustand der Befestigungseinheit zumindest teilweise mit der Sicherungskraft beaufschlagt wird. Besonders bevorzugt liegt das Befestigungselement in zumindest einem unbefestigten Zustand der Befestigungseinheit entlang der Befestigungsachse betrachtet über zumindest einen Teil der Länge des Kraftschlussbereichs an dem Kraftschlusselement an. Vorzugsweise ist das Befestigungselement zumindest während eines Übergangs von dem befestigten Zustand in zumindest einen unbefestigten Zustand über die hohlzylindrische Grundform im Kraftschlussbereich an dem Gegenbefestigungselement entlang der Befestigungsachse geführt, wobei insbesondere eine Innenfläche der hohlzylindrischen Grundform an einer Außenfläche des Gegenbefestigungselements zumindest teilweise anliegt. Durch die erfindungsgemäße Ausgestaltung der Befestigungsvorrichtung kann vorteilhaft eine Sicherung des Befestigungselements an der Abdeckeinheit, insbesondere dem Abdeckelement, bei und nach einem Lösen der Befestigungseinheit sichergestellt werden. Es kann vorteilhaft ein Verkanten der Abdeckeinheit, insbesondere des Abdeckelements, und/oder der Befestigungseinheit bei einem Lösen von einem von zumindest mehreren Befestigungselementen der Befestigungseinheit zumindest im Wesentlichen vermieden werden.

Zudem wird vorgeschlagen, dass die Sicherungseinheit zumindest ein, insbesondere das vorher genannte, zumindest teilweise als Magnet ausgebildetes Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist. Vorzugsweise ist das Kraftschlusselement aus einem Neodym-haltigen und/oder Eisen-haltigen Material und/oder einem anderen einem Fachmann bekannten magnetischen Material ausgebildet. Bevorzugt ist das zumindest teilweise als Magnet ausgebildete Kraftschlusselement dazu vorgesehen, das Befestigungselement über eine Magnetkraft an der Abdeckeinheit, insbesondere dem Abdeckelement zu sichern. Bevorzugt ist das Kraftschlusselement um die Befestigungsachse angeordnet. Vorzugsweise sind das Kraftschlusselement und das Befestigungselement in zumindest einem befestigten Zustand zumindest teilweise koaxial um die Befestigungsachse angeordnet. Bevorzugt liegt das Befestigungselement in zumindest einem befestigten Zustand der Befestigungseinheit in zumindest einer sich zumindest im Wesentlichen senkrecht zur Befestigungsachse erstreckenden Ebene zumindest teilweise an dem Kraftschlusselement an. Es ist aber auch denkbar, dass das Kraftschlusselement entlang der Befestigungsachse betrachtet beabstandet zu dem Befestigungselement angeordnet ist und dazu vorgesehen ist, über eine Magnetkraft das Befestigungselement an der Abdeckeinheit, insbesondere dem Abdeckelement, zu sichern. Alternativ oder zusätzlich ist denkbar, dass das Befestigungselement zumindest teilweise als ein Magnet ausgebildet ist, wobei insbesondere das Kraftschlusselement zumindest teilweise als ein Magnet oder aus einem ferromagnetischen Material ausgebildet ist. Durch die erfindungsgemäße Ausgestaltung der Befestigungsvorrichtung kann eine vorteilhaft robuste und langlebige Sicherung der Befestigungseinheit erreicht werden, insbesondere da Abrieb und Abnutzung des Kraftschlusselements und des Befestigungselements vorteilhaft vermieden werden kann. Es kann eine vorteilhaft sichere Verbindung zwischen der Sicherungseinheit und der Befestigungseinheit ermöglicht werden.

Ferner wird vorgeschlagen, dass die Sicherungseinheit zumindest ein, insbesondere das vorher genannte, Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist, wobei das Kraftschlusselement zumindest in einem Kraftschlussbereich des Kraftschlusselements zumindest teilweise aus einem Kunststoff und/oder einem Gummi gebildet ist. Vorzugsweise liegt das Kraftschlusselement in dem Kraftschlussbereich des Kraftschlusselements, insbesondere über eine zumindest teilweise zumindest im Wesentlichen parallel zur Befestigungsachse ausgerichteten Fläche, an dem Befestigungselement an. Vorzugsweise ist das Kraftschlusselement dazu vorgesehen, das Befestigungselement über eine Reibungskraft an der Abdeckeinheit, insbesondere dem Abdeckelement, zu sichern. Bevorzugt ist das Kraftschlusselement dazu vorgesehen, über ein Anliegen des Kraftschlusselements innerhalb des Kraftschlussbereichs des Kraftschlusselements an dem Befestigungselement, das Befestigungselement in eine zumindest im Wesentlichen parallel zur Befestigungsachse ausgerichtete Richtung mit einer Reibungskraft zu beaufschlagen. Es ist denkbar, dass das Befestigungselement in dem Kraftschlussbereich des Befestigungselements derart ausgebildet ist, dass die Reibungskraft in die zumindest im Wesentlichen parallel zur Befestigungsachse ausgerichtete Richtung größer ist wie eine durch eine Drehung des Befestigungselements relativ zum Kraftschlusselement um die Befestigungsachse auf das Befestigungselement wirkende Reibungskraft. Es ist denkbar, dass das Kraftschlusselement an der Abdeckeinheit, insbesondere dem Abdeckelement, um die Befestigungsachse drehbar gelagert ist. Durch die erfindungsgemäße Ausgestaltung der Befestigungsvorrichtung können vorteilhaft geringe Herstellungskosten, insbesondere des Kraftschlusselements, ermöglicht werden. Es kann eine vorteilhaft leichte Sicherungseinheit erreicht werden. Es kann eine vorteilhaft hohe Resistenz gegen Umwelteinflüsse und/oder Verschmutzungen ermöglicht werden.

Des Weiteren wird vorgeschlagen, dass die Sicherungseinheit zumindest ein, insbesondere das vorher genannte, Kraftschlusselement zu einer, insbesondere zumindest im Wesentlichen formschlussfreien, kraftschlüssigen Verbindung, insbesondere zu einer magnetischen Verbindung, mit zumindest einem, insbesondere dem vorher genannten, Befestigungselement der Befestigungseinheit aufweist, wobei das Kraftschlusselement an einer dem Befestigungselement zugewandten Seite, insbesondere innerhalb des Kraftschlussbereichs des Kraftschlusselements, zumindest im Wesentlichen konusförmig oder zumindest teilweise torusförmig ausgebildet ist. Vorzugsweise weist das, insbesondere das zumindest im Wesentlichen konusförmige, Kraftschlusselement an einer dem Befestigungselement abgewandten Seite zumindest eine sich in eine von der Antriebseinheit und/oder dem Gehäuse zugewandte Richtung zumindest teilweise verjüngende Grundform auf. Beispielsweise ist das Kraftschlusselement als ein O-Ring, als ein Keilring o. dgl. ausgebildet. Vorzugsweise weist das Kraftschlusselement einen minimalen Innendurchmesser auf, welcher zumindest im Wesentlichen gleich einem maximalen Außendurchmesser des Befestigungselements innerhalb des Kraftschlussbereichs ist. Durch die erfindungsgemäße Ausgestaltung der Befestigungsvorrichtung kann, insbesondere entlang einer zumindest im Wesentlichen parallel zur Befestigungsachse ausgerichteten Achse, eine vorteilhaft kompakte Kraftschlussfläche realisiert werden, wodurch insbesondere eine dem Lösen der Befestigungseinheit entgegengerichtete Kraft der Sicherungseinheit vorteilhaft verringert werden kann und/oder ein Übergangspunkt von einem gesicherten Zustand zu einem ungesicherten Zustand der Befestigungseinheit, insbesondere des Befestigungselements, vorteilhaft genau eingestellt werden kann.

Zudem wird vorgeschlagen, dass die Sicherungseinheit zumindest ein, insbesondere ein weiteres, Kraftschlusselement aufweist, das dazu vorgesehen ist, in zumindest einem unbefestigten Zustand der Befestigungseinheit, insbesondere durch eine kraftschlüssige Verbindung, insbesondere eine magnetische Verbindung, mit zumindest einem an der Antriebseinheit und/oder dem Gehäuse angeordneten, insbesondere weiteren, Befestigungselement der Befestigungseinheit, das Kettensägenschwert unabhängig von der Abdeckeinheit, insbesondere dem Abdeckelement, in zumindest eine Richtung, insbesondere in einem unbefestigten Zustand der Befestigungseinheit, an der Antriebseinheit und/oder dem Gehäuse zu fixieren oder zu halten. Vorzugsweise ist das weitere Kraftschlusselement dazu vorgesehen, insbesondere durch die kraftschlüssige Verbindung mit dem weiteren Befestigungselement, das Kettensägenschwert gegen eine Bewegung entlang der Befestigungsachse und/oder zumindest im Wesentlichen senkrecht zur Befestigungsachse an der Antriebseinheit und/oder dem Gehäuse zu sichern. Bevorzugt ist das weitere Kraftschlusselement, insbesondere zu einem Befestigen und/oder zu einem Halten der Abdeckeinheit an der Antriebseinheit und/oder dem Gehäuse, kraft- und/oder formschlüssig mit dem Kraftschlusselement, welches insbesondere an der Abdeckeinheit angeordnet ist, verbindbar. Bevorzugt ist das weitere Kraftschlusselement zumindest teilweise aus einem magnetisierbaren Material und/oder als ein Magnet ausgebildet. Insbesondere ist das weitere Befestigungselement zumindest teilweise aus einem magnetisierbaren Material und/oder als Magnet ausgebildet. Vorzugsweise ist das weitere Kraftschlusselement in einem an dem Kraftschlusselement angeordneten Zustand dazu vorgesehen, in einem befestigten Zustand der Befestigungseinheit das Befestigungselement über eine kraftschlüssige, insbesondere formschlussfreie, Verbindung an der Abdeckeinheit, insbesondere dem Abdeckelement, zu sichern. Vorzugsweise ist das weitere Kraftschlusselement in einem von dem Kettensägenschwert beabstandeten Zustand der Abdeckeinheit beabstandet von dem Abdeckelement und/oder dem Kraftschlusselement angeordnet. In einer besonders bevorzugten Ausgestaltung ist das weitere Kraftschlusselement einstückig mit dem Kettensägenschwert ausgebildet. Vorzugsweise ist das weitere Befestigungselement einstückig mit der Antriebseinheit und/oder dem Gehäuse ausgebildet. Bevorzugt ist das weitere Befestigungselement getrennt von dem Gegenbefestigungselement angeordnet. Vorzugsweise sind/ist das weitere Kraftschlusselement und/oder das weitere Befestigungselement derart ausgebildet, dass eine Haltekraft, insbesondere eine Magnetkraft, des Kraftschlusses zwischen dem weiteren Kraftschlusselement und dem weiteren Befestigungselement zumindest im Wesentlichen größer ist als summierte Gewichtskräfte des Kettensägenschwerts, der Schneidkette und/oder des weiteren Kraftschlusselements. Durch die erfindungsgemäße Ausgestaltung der Befestigungsvorrichtung kann eine vorteilhaft hohe Funktionalität der Sicherungseinheit ermöglicht werden. Es kann eine vorteilhaft einfache und schnelle Montage des Kettensägenschwerts ermöglicht werden. Es kann ein unbeabsichtigtes Lösen des Kettensägenschwerts von der Antriebseinheit und/oder dem Gehäuse vorteilhaft vermieden werden. Insbesondere kann eine vorteilhaft hohe Sicherheit bei einem Wechseln der Schneidkette und/oder des Kettensägenschwerts erreicht werden.

Außerdem wird eine Kettensäge vorgeschlagen, die zumindest ein Kettensägenschwert, zumindest eine Antriebseinheit und/oder ein Gehäuse sowie zumindest eine erfindungsgemäße Befestigungsvorrichtung zum Befestigen des Kettensägenschwerts an der Antriebseinheit und/oder dem Gehäuse umfasst. Vorzugsweise umfasst die Kettensäge die zumindest eine Schneidkette, die über das Kettensägenschwert mittels der Antriebseinheit umlaufend um das Kettensägenschwert antreibbar ist. Durch die erfindungsgemäße Ausgestaltung der Kettensäge kann eine vorteilhaft einfache und zuverlässige Befestigung des Kettensägenschwerts an der Antriebseinheit und/oder dem Gehäuse ermöglicht werden, insbesondere da die Befestigungseinheit zumindest teilweise formschlussfrei an der Sicherungseinheit gesichert werden kann und dadurch Bedienungsfehler oder Fehler durch Beschädigungen vermieden werden können. Es können vorteilhaft geringe Kosten ermöglicht werden. Es kann vorteilhaft eine Abnutzung von Bauteilen zumindest im Wesentlichen vermieden werden, insbesondere da die Sicherung formschlussfrei erfolgen kann.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Explosionszeichnung einer erfindungsgemäßen Kettensäge mit einer erfindungsgemäßen Befestigungsvorrichtung zum Befestigen eines Kettensägenschwerts der erfindungsgemäßen Kettensäge an einer Antriebseinheit und/oder einem Gehäuse der erfindungsgemäßen Kettensäge,
- Fig. 2: eine schematische Darstellung eines Schnitts durch einen Teil der erfindungsgemäßen Kettensäge im Bereich der erfindungsgemäßen Befestigungsvorrichtung in einem befestigten Zustand einer Befestigungseinheit der Befestigungsvorrichtung,
- Fig. 3: eine schematische Explosionszeichnung des Schnitts durch den Teil der erfindungsgemäßen Kettensäge im Bereich der erfindungsgemäßen Befestigungsvorrichtung,
- Fig. 4: eine schematische Darstellung eines Schnitts durch eine Abdeckeinheit und eine Sicherungseinheit einer alternativen Ausgestaltung einer erfindungsgemäßen Befestigungsvorrichtung und
- Fig. 5: eine schematische Darstellung eines Schnitts durch eine Abdeckeinheit und eine Sicherungseinheit einer weiteren alternativen Ausgestaltung einer erfindungsgemäßen Befestigungsvorrichtung.

### Beschreibung der Ausführungsbeispiele

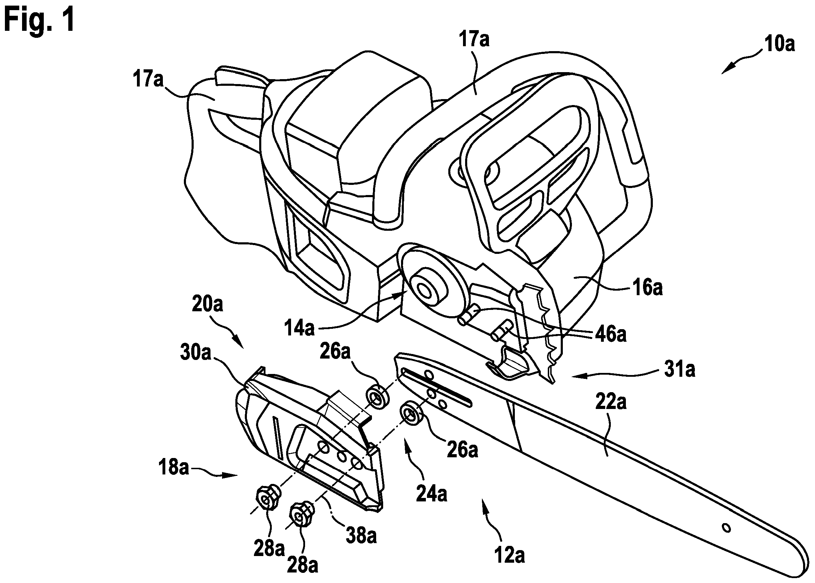

In der Figur 1 ist eine Explosionszeichnung einer Kettensäge 10a gezeigt. Die Kettensäge 10a umfasst ein Kettensägenschwert 22a, eine Antriebseinheit 14a, ein Gehäuse 16a und eine Befestigungsvorrichtung 12a zum Befestigen des Kettensägenschwerts 22a an der Antriebseinheit 14a und/oder dem Gehäuse 16a. Die Kettensäge 10a umfasst eine Schneidkette zum Bearbeiten eines Werkstücks, welche in der Figur 1 nicht gezeigt ist. Bevorzugt ist die Antriebseinheit 14a dazu vorgesehen, die Schneidkette in einer Bewegung umlaufend um das Kettensägenschwert 22a anzutreiben. Die Antriebseinheit 14a ist hierbei als Elektromotor ausgebildet. Es sind jedoch auch andere Ausgestaltungen der Antriebseinheit 14a, beispielsweise als Verbrennungsmotor, denkbar. Das Gehäuse 16a umschließt die Antriebseinheit 14a zumindest größtenteils. Die Kettensäge 10a, insbesondere das Gehäuse 16a, umfasst zwei Griffelemente 17a zum Führen durch einen Benutzer.

Die Befestigungsvorrichtung 12a weist eine Befestigungseinheit 18a, eine Abdeckeinheit 20a und eine Sicherungseinheit 24a auf. Vorzugsweise ist die Befestigungsvorrichtung 12a dazu vorgesehen, das Kettensägenschwert 22a über die Befestigungseinheit 18a abnehmbar an der Antriebseinheit 14a und/oder dem Gehäuse 16a der Kettensäge 10a zu befestigen. Bevorzugt ist die Befestigungsvorrichtung 12a, insbesondere die Befestigungseinheit 18a, dazu vorgesehen, zu einem Wechseln und/oder einer Reinigung des Kettensägenschwerts 22a, der Schneidkette, der Antriebseinheit 14a und/oder des Gehäuses 16a gelöst zu werden. Die Befestigungseinheit 18a weist einen befestigten Zustand auf, in dem die Abdeckeinheit 20a und das Kettensägenschwert 22a über die Befestigungseinheit 18a an der Antriebseinheit 14a und/oder dem Gehäuse 16a befestigt sind. Die Befestigungseinheit 18a weist zwei Befestigungselemente 28a und zwei Gegenbefestigungselemente 46a auf. Die zwei Gegenbefestigungselemente 46a sind fest mit der Antriebseinheit 14a und dem Gehäuse 16a verbunden. Jeweils eines der zwei Befestigungselemente 28a ist in dem befestigten Zustand der Befestigungseinheit 18a jeweils mit einem der Gegenbefestigungselemente 46a verbunden. Die Befestigungseinheit 18a weist für jedes Befestigungselement 28a eine Befestigungsachse 38a auf, entlang derer das Befestigungselement 28a zum Lösen der Befestigungseinheit 18a von dem Gegenbefestigungselement 46a abnehmbar ist und/oder entlang derer das Befestigungselement 28a zu einem Befestigen der Befestigungseinheit 18a, insbesondere der Abdeckeinheit 20a und/oder des Kettensägenschwerts 22a an der Antriebseinheit 14a und/oder dem Gehäuse 16a, mit dem Gegenbefestigungselement 46a verbindbar ist. Die Befestigungsachsen 38a sind zumindest im Wesentlichen senkrecht zu einer Haupterstreckungsachse des Kettensägenschwerts 22a und zu einer Haupterstreckungsachse der Abdeckeinheit 20a ausgerichtet. Die Befestigungselemente 28a sind als Schraubmuttern ausgebildet. Die Gegenbefestigungselemente 46a sind als Gewindebolzen ausgebildet. Die Befestigungselemente 28a sind um die Befestigungsachsen 38a auf die Gegenbefestigungselemente 46a aufschraubbar. Es sind aber auch andere Ausgestaltungen der Befestigungseinheit 18a, insbesondere der Befestigungselemente 28a und/oder der Gegenbefestigungselemente 46a, denkbar, insbesondere mit einer von zwei abweichenden Anzahl von Befestigungselementen 28a und/oder Gegenbefestigungselementen 46a.

Die Abdeckeinheit 20a ist dazu vorgesehen, die Befestigungseinheit 18a und/oder das Kettensägenschwert 22a zumindest teilweise zu verdecken, insbesondere in einem Bereich, in dem die Befestigungseinheit 18a und/oder das Kettensägenschwert 22a an der Antriebseinheit 14a und/oder dem Gehäuse 16a der Kettensäge 10a anliegen/anliegt. Die Abdeckeinheit 20a weist ein Abdeckelement 30a auf, welches zumindest teilweise korrespondierend zu dem Gehäuse 16a der Kettensäge 10a ausgebildet ist. Das Abdeckelement 30a ist zumindest teilweise aus einem Kunststoff ausgebildet. Vorzugsweise ist das Abdeckelement 30a dazu vorgesehen, zumindest einen Kettenantriebsbereich 31a, insbesondere zumindest einen Antriebsritzel, der Antriebseinheit 14a und/oder des Gehäuses 16a der Kettensäge 10a zumindest größtenteils zu verdecken. Das Abdeckelement 30a liegt in dem befestigten Zustand der Befestigungseinheit 18a zumindest teilweise, insbesondere zumindest größtenteils, an dem Gehäuse 16a der Kettensäge 10a an. Das Abdeckelement 30a und das Gehäuse 16a umschließen in dem befestigten Zustand der Befestigungseinheit 18a die Befestigungseinheit 18a, die Sicherungseinheit 24a und/oder das Kettensägenschwert 22a zumindest teilweise, insbesondere zumindest größtenteils. Es sind jedoch auch andere Ausgestaltungen der Abdeckeinheit 20a denkbar.

Die Sicherungseinheit 24a ist dazu vorgesehen, die Befestigungseinheit 18a, insbesondere die Befestigungselemente 28a, zumindest teilweise an der Abdeckeinheit 20a, insbesondere dem Abdeckelement 30a, zu sichern. Vorzugsweise ist die Sicherungseinheit 24a dazu vorgesehen, die Befestigungselemente 28a zumindest axial entlang einer der Befestigungsachsen 38a an dem Abdeckelement 30a zu sichern. Bevorzugt sind die Befestigungselemente 28a in einem mittels der Sicherungseinheit 24a gesicherten Zustand relativ zur Sicherungseinheit 24a um die Befestigungsachse 38a um mehr als 360° drehbar. Die Sicherungseinheit 24a ist in dem befestigten Zustand der Befestigungseinheit 18a zumindest teilweise an der Abdeckeinheit 20a und der Befestigungseinheit 18a angeordnet. Die Sicherungseinheit 24a ist als eine, insbesondere zumindest im Wesentlichen formschlussfreie, Kraftschlusseinheit ausgebildet, wobei insbesondere eine Sicherung der Befestigungseinheit 18a, insbesondere des Befestigungselements 28a, an der Abdeckeinheit 20a, insbesondere dem Abdeckelement 30a, über die Sicherungseinheit 24a zumindest größtenteils, insbesondere zumindest im Wesentlichen vollständig, über einen Kraftschluss erfolgt. Die Sicherungseinheit 24a weist zwei Kraftschlusselemente 26a auf, die zu einer, insbesondere zumindest im Wesentlichen formschlussfreien, kraftschlüssigen Verbindung mit einem der Befestigungselemente 28a der Befestigungseinheit 18a vorgesehen sind. Die zwei Kraftschlusselemente 26a sind kreisringförmig ausgebildet. Die zwei Kraftschlusselemente 26a weisen eine hohlzylindrische Grundform auf. Die zwei Kraftschlusselemente 26a sind zumindest teilweise als Magnet ausgebildet. Die zwei Befestigungselemente 28a und die zwei Gegenbefestigungselemente 46a sind aus einem magnetisierbaren Material und/oder einem magnetischen Material ausgebildet. Es sind jedoch auch andere Ausgestaltungen der Sicherungseinheit 24a denkbar.

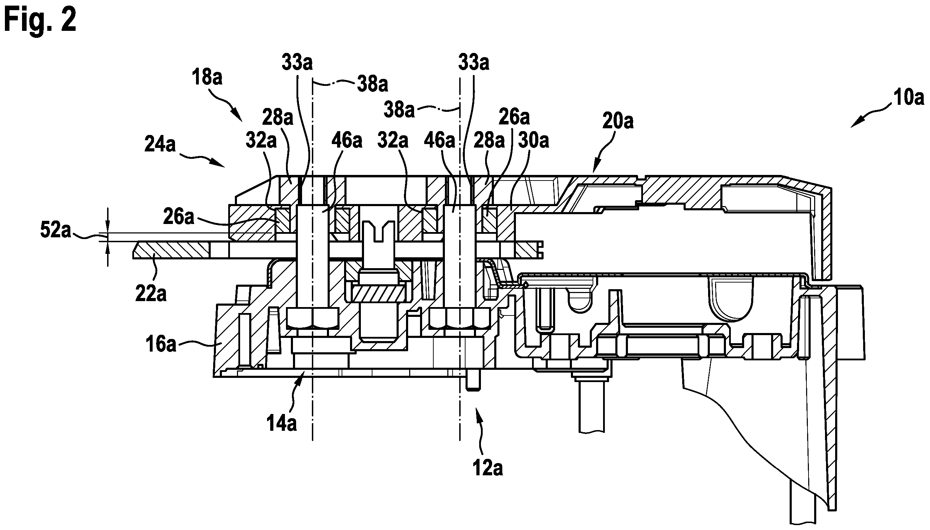

In der Figur 2 ist ein Schnitt durch die Kettensäge 10a im Bereich der Befestigungsvorrichtung 12a in dem befestigten Zustand der Befestigungseinheit 18a gezeigt. Die Schnittebene des Schnitts erstreckt sich parallel zu den Befestigungsachsen 38a. Die Befestigungselemente 28a liegen in einer zumindest im Wesentlichen senkrecht zu den Befestigungsachsen 38a ausgerichteten Richtung an dem Abdeckelement 30a der Abdeckeinheit 20a und/oder den Kraftschlusselementen 26a der Sicherungseinheit 24a an. Die Befestigungselemente 28a sind entlang der Befestigungsachsen 38a getrennt von der Sicherungseinheit 24a, insbesondere den Kraftschlusselementen 26a, angeordnet. Die zwei Befestigungselemente 28a und die zwei Gegenbefestigungselemente 46a weisen jeweils ein Gewinde 33a auf, wobei insbesondere die Gewinde 33a der Befestigungselemente 28a korrespondierend zu den Gewinden 33a der Gegenbefestigungselemente 46a ausgebildet sind. Die Kraftschlusselemente 26a sind in die Abdeckeinheit 20a, insbesondere das Abdeckelement 30a, eingebettet und mittels einer kraft- und/oder formschlüssigen Verbindung in Ausnehmungen 32a des Abdeckelements 30a fixiert. Es ist auch denkbar, dass die Kraftschlusselemente 26a mittels einer stoffschlüssigen Verbindung einteilig mit dem Abdeckelement 30a ausgebildet sind. Die Kraftschlusselemente 26a sind, insbesondere in dem befestigten Zustand der Befestigungseinheit 18a, an zumindest einer den Befestigungselementen 28a abgewandten Seite des Abdeckelements 30a angeordnet. Das Abdeckelement 30a ist, insbesondere in dem befestigten Zustand der Befestigungseinheit 18a, zumindest teilweise zwischen den Befestigungselementen 28a und den Kraftschlusselementen 26a angeordnet. Die Ausnehmungen 32a sind korrespondierend zu der Grundform der Kraftschlusselemente 26a ausgebildet. Die Kraftschlusselemente 26a umgeben die Befestigungselemente 28a in einem an der Abdeckeinheit 20a, insbesondere dem Abdeckelement 30a der Abdeckeinheit 20a, angeordneten Zustand der Befestigungselemente 28a zumindest segmentweise, insbesondere in einer sich zumindest im Wesentlichen senkrecht zu den Befestigungsachsen 38a erstreckenden Ebene zumindest im Wesentlichen vollständig. Es ist denkbar, dass die Kraftschlusselemente 26a, insbesondere in dem befestigten Zustand der Befestigungseinheit 18a und/oder einem gesicherten Zustand des Befestigungselements 28a, entlang zumindest eines Winkelbereichs von insbesondere mehr als 5 °, vorzugsweise mehr als 15° und besonders bevorzugt mehr als 45°, um die Befestigungselemente 28a angeordnet sind, insbesondere entlang einer Umfangsrichtung der Befestigungselemente 28a. Vorzugsweise sind/ist die Sicherungseinheit 24a, insbesondere die Kraftschlusselemente 26a, und/oder die Abdeckeinheit 20a, insbesondere das Abdeckelement 30a, dazu vorgesehen, die Befestigungselemente 28a in dem befestigten Zustand der Befestigungseinheit 18a von dem Kettensägenschwert 22a beabstandet zu halten. Die Befestigungselemente 28a weisen in dem befestigten Zustand einen Abstand 52a von dem Kettensägenschwert 22a auf.

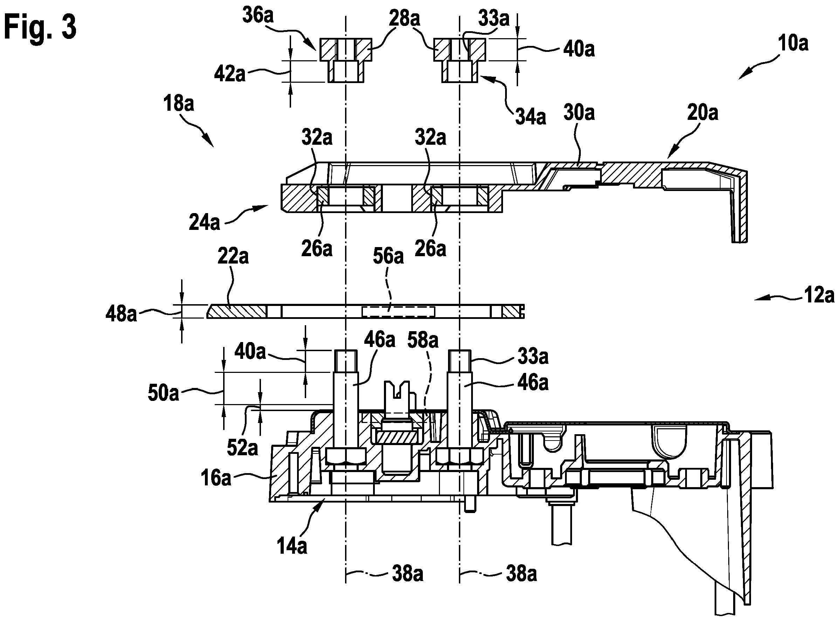

In der Figur 3 ist eine Explosionszeichnung der Kettensäge 10a mit der Befestigungsvorrichtung 12a in dem Schnitt gezeigt. Die Befestigungselemente 28a umfassen einen Kraftschlussbereich 34a und einen Befestigungsbereich 36a, wobei eine Länge 40a des Kraftschlussbereichs 34a entlang einer der Befestigungsachsen 38a der Befestigungseinheit 18a größer ist als eine Länge 42a des Befestigungsbereichs 36a. Der Kraftschlussbereich 34a und der Befestigungsbereich 36a sind entlang einer der Befestigungsachsen 38a betrachtet hintereinander angeordnet. Die Befestigungselemente 28a sind derart ausgebildet, dass ein Verhältnis zwischen der Länge 42a des Befestigungsbereichs 36a und der Länge 40a des Kraftschlussbereichs 34a entlang einer der Befestigungsachsen 38a insbesondere mindestens 1.05, vorzugsweise mindestens 1.1 und besonders bevorzugt 1.2, ist. Die Gewinde 33a der Befestigungselemente 28a sind in dem Befestigungsbereich 36a angeordnet. Die Befestigungselemente 28a liegen in dem befestigten Zustand innerhalb des Kraftschlussbereichs 34a an den Kraftschlusselementen 26a an. Die Befestigungselemente 28a sind in dem Kraftschlussbereich 34a entlang einer der Befestigungsachsen 38a gewindefrei oder verbindungsmittelfrei ausgebildet. Die Befestigungselemente 28a weisen entlang einer der Befestigungsachsen 38a eine gesamte Länge auf, die insbesondere gleich einer Summe aus der Länge 40a des Kraftschlussbereichs 34a und der Länge 42a des Befestigungsbereichs 36a ist. Die Befestigungselemente 28a weisen in dem Kraftschlussbereich 34a eine zumindest im Wesentlichen hohlringförmige Grundform auf. Die Befestigungselemente 28a weisen in dem Befestigungsbereich 36a eine zumindest im Wesentlichen n-eckige Grundform auf, die insbesondere zu einem Steckschlüssel korrespondierend ausgebildet ist. Die Befestigungselemente 28a weisen in dem Befestigungsbereich 36a in einer sich zumindest im Wesentlichen senkrecht zu den Befestigungsachsen 38a erstreckenden Ebene einen größeren maximalen Durchmesser auf wie in dem Kraftschlussbereich 34a, insbesondere in einer sich parallel dazu zumindest im Wesentlichen senkrecht zu den Befestigungsachsen 38a erstreckenden Ebene. Die Befestigungselemente 28a weisen in einer sich zumindest im Wesentlichen senkrecht zu den Befestigungsachsen 38a erstreckenden Ebene einen maximalen Innendurchmesser des Gewindes 33a auf, der gleich, insbesondere kleiner als, einem Innendurchmesser der Befestigungselemente 28a innerhalb des Kraftschlussbereichs 34a ist. Die Summe der gesamten Länge des Befestigungselements 28a entlang einer der Befestigungsachsen 38a und einer Stärke 48a des Kettensägenschwerts 22a ist kleiner als eine gewindefreie oder verbindungsmittelfreie Länge 50a der Gegenbefestigungselemente 46a, welche außerhalb der Antriebseinheit 14a und des Gehäuses 16a angeordnet ist. Die Kraftschlusselemente 26a sind derart ausgebildet, dass die Befestigungselemente 28a in zumindest einem unbefestigten Zustand der Befestigungseinheit 18a zumindest teilweise mit einer Sicherungskraft beaufschlagt werden. Die Befestigungselemente 28a sind in dem unbefestigten Zustand der Befestigungseinheit 18a entlang einer der Befestigungsachsen 38a betrachtet zumindest teilweise über die Länge 42a des Kraftschlussbereichs 34a an einem der Kraftschlusselemente 26a angeordnet. Es ist denkbar, dass die Sicherungseinheit 24a ein weiteres Kraftschlusselement 56a aufweist, welches in der Figur 3 gestrichelt angedeutet dargestellt ist. Das weitere Kraftschlusselement 56a ist dazu vorgesehen, insbesondere in zumindest einem unbefestigten Zustand der Befestigungseinheit 18a, insbesondere durch eine kraftschlüssige magnetische Verbindung mit zumindest einem an der Antriebseinheit 14a und/oder dem Gehäuse 16a angeordneten weiteren Befestigungselement 58a der Befestigungseinheit 18a das Kettensägenschwert 22a unabhängig von der Abdeckeinheit 20a in zumindest eine Richtung, insbesondere entlang einer der Befestigungsachsen 38a, an der Antriebseinheit 14a und/oder dem Gehäuse 16a zu fixieren und/oder zu halten. Das weitere Befestigungselement 58a ist insbesondere in der Figur 3 angedeutet dargestellt. Das weitere Befestigungselement 58a ist einstückig mit der Antriebseinheit 14a und/oder dem Gehäuse 16a ausgebildet. Das weitere Kraftschlusselement 56a ist einstückig mit dem Kettensägenschwert 22a ausgebildet. Das weitere Kraftschlusselement 56a ist zumindest teilweise aus einem magnetisierbaren Material und/oder als ein Magnet ausgebildet. Bei einer Ausgestaltung des weiteren Kraftschlusselements 56a übt das weitere Kraftschlusselement 56a eine Magnetkraft auf das aus einem magnetisierbaren Material und/oder als Magnet ausgebildete weitere Befestigungselement 58a aus, wodurch insbesondere das Kettensägenschwert 22a an der Antriebseinheit 14a und/oder dem Gehäuse 16a fixiert und/oder gehalten werden kann. Insbesondere sind das weitere Kraftschlusselement 56a und das weitere Befestigungselement 58a derart ausgebildet, dass eine Magnetkraft des Kraftschlusses zwischen dem weiteren Kraftschlusselement 56a und dem weiteren Befestigungselement 58a zumindest im Wesentlichen größer ist als summierte Gewichtskräfte des Kettensägenschwerts 22a, der Schneidkette und des weiteren Kraftschlusselements 56a.

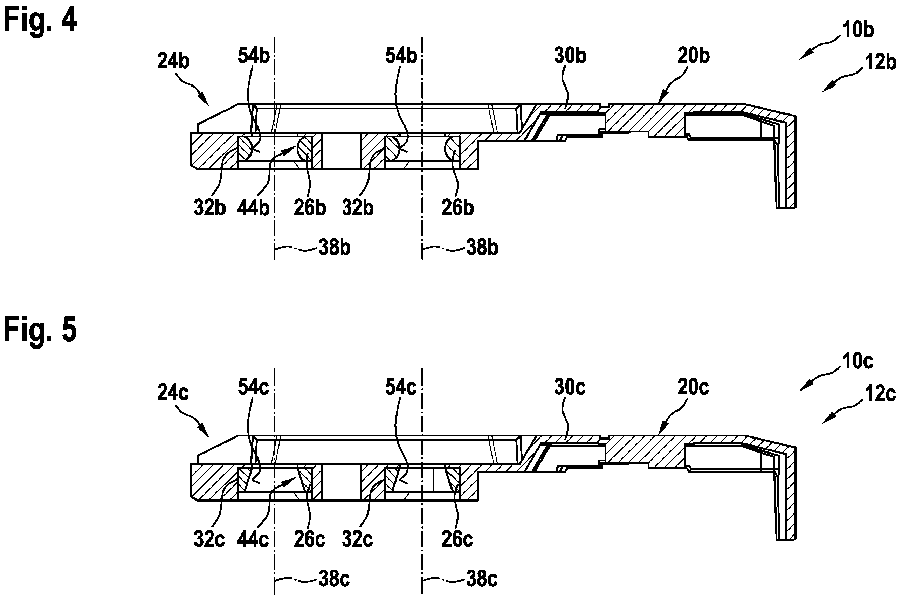

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch die Buchstaben b und c ersetzt.

Die Figur 4 zeigt einen Schnitt durch ein Abdeckelement 30b einer Abdeckeinheit 20b und eine Sicherungseinheit 24b einer alternativen Ausgestaltung einer Befestigungsvorrichtung 12b zum Befestigen eines Kettensägenschwerts 22b an einer Antriebseinheit 14b und/oder einem Gehäuse 16b einer Kettensäge 10b, welche in Figur 4 jedoch nicht gezeigt sind. Die in der Figur 4 dargestellte Befestigungsvorrichtung 12b weist eine zumindest im Wesentlichen analoge Ausgestaltung zu der in der Beschreibung der Figuren 1 bis 3 beschriebenen Befestigungsvorrichtung 12a auf, so dass bezüglich einer Ausgestaltung der in der Figur 4 dargestellten Befestigungsvorrichtung 12b zumindest im Wesentlichen auf die Beschreibung der Figuren 1 bis 3 verwiesen werden kann. Im Unterschied zu der in der Beschreibung der Figuren 1 bis 3 beschriebenen Befestigungsvorrichtung 12a weist die in der Figur 4 dargestellte Sicherungseinheit 24b der Befestigungsvorrichtung 12b vorzugsweise zwei Kraftschlusselemente 26b zu einer, insbesondere zumindest im Wesentlichen formschlussfreien, kraftschlüssigen Verbindung mit zumindest einem Befestigungselement 28b einer Befestigungseinheit 18b der Befestigungsvorrichtung 12b, welche in Figur 4 jedoch nicht gezeigt sind. Die Sicherungseinheit 24b ist als eine, insbesondere zumindest im Wesentlichen formschlussfreie, Kraftschlusseinheit ausgebildet. Die Kraftschlusselemente 26b sind an einer den Befestigungselementen 28b zugewandten Seite zumindest teilweise torusförmig ausgebildet. Die Kraftschlusselemente 26b sind in einem Kraftschlussbereich 44b der Kraftschlusselemente 26b zumindest teilweise aus einem Gummi und/oder einem Kunststoff ausgebildet. Die in dem Kraftschlussbereich 44b angeordneten Flächen 54b der Kraftschlusselemente 26b sind gebogen ausgebildet. Die Kraftschlusselemente 26b sind dazu vorgesehen, die Befestigungselemente 28b über eine Reibungskraft an der Abdeckeinheit 20b, insbesondere dem Abdeckelement 30b, zu sichern. Bevorzugt sind die Kraftschlusselemente 26b dazu vorgesehen, über ein Anliegen der Kraftschlusselemente 26b innerhalb eines Kraftschlussbereichs des Kraftschlusselements 26b an den Befestigungselementen 28b, die Befestigungselemente 28b in eine zumindest im Wesentlichen parallel zu einer der Befestigungsachsen 38b ausgerichtete Richtung mit einer Reibungskraft zu beaufschlagen.

Die Figur 5 zeigt einen Schnitt durch ein Abdeckelement 30c einer Abdeckeinheit 20c und eine Sicherungseinheit 24c einer alternativen Ausgestaltung einer Befestigungsvorrichtung 12c zum Befestigen eines Kettensägenschwerts 22c an einer Antriebseinheit 14c und/oder einem Gehäuse 16c einer Kettensäge 10c, welche in Figur 5 jedoch nicht gezeigt sind. Die in der Figur 5 dargestellte Befestigungsvorrichtung 12c weist eine zumindest im Wesentlichen analoge Ausgestaltung zu der in der Beschreibung der Figuren 1 bis 3 beschriebenen Befestigungsvorrichtung 12a auf, so dass bezüglich einer Ausgestaltung der in der Figur 5 dargestellten Befestigungsvorrichtung 12c zumindest im Wesentlichen auf die Beschreibung der Figuren 1 bis 3 verwiesen werden kann. Im Unterschied zu der in der Beschreibung der Figuren 1 bis 3 beschriebenen Befestigungsvorrichtung 12a weist die in der Figur 5 dargestellte Sicherungseinheit 24c der Befestigungsvorrichtung 12c vorzugsweise zwei Kraftschlusselemente 26c zu einer, insbesondere zumindest im Wesentlichen formschlussfreien, kraftschlüssigen Verbindung mit zumindest einem Befestigungselement 28c einer Befestigungseinheit 18c der Befestigungsvorrichtung 12c, welche in Figur 5 jedoch nicht gezeigt sind. Die Sicherungseinheit 24c ist als eine, insbesondere zumindest im Wesentlichen formschlussfreie, Kraftschlusseinheit ausgebildet. Die Kraftschlusselemente 26c sind an einer den Befestigungselementen 28c zugewandten Seite zumindest im Wesentlichen konusförmig ausgebildet. Die Kraftschlusselemente 26c sind in einem Kraftschlussbereich 44c der Kraftschlusselemente 26c zumindest teilweise aus einem Gummi und/oder einem Kunststoff ausgebildet. Die in dem Kraftschlussbereich 44c angeordneten Flächen 54c der Kraftschlusselemente 26c sind flach ausgebildet, wobei sich die Befestigungselemente 28c über die Flächen 54c in eine zumindest im Wesentlichen parallel zu den Befestigungsachsen 38c ausgerichtete und dem Kettensägenschwert 22c zugewandte Richtung verjüngen. Die Kraftschlusselemente 26c sind dazu vorgesehen, die Befestigungselemente 28c über eine Reibungskraft an der Abdeckeinheit 20c, insbesondere dem Abdeckelement 30c, zu sichern. Bevorzugt sind die Kraftschlusselemente 26c dazu vorgesehen, über ein Anliegen der Kraftschlusselemente 26c innerhalb eines Kraftschlussbereichs des Kraftschlusselements 26c an den Befestigungselementen 28c, die Befestigungselemente 28c in eine zumindest im Wesentlichen parallel zu einer der Befestigungsachsen 38c ausgerichtete Richtung mit einer Reibungskraft zu beaufschlagen.

## Patentansprüche

1. Befestigungsvorrichtung zum Befestigen eines Kettensägenschwerts an einer Antriebseinheit und/oder einem Gehäuse einer Kettensäge, mit zumindest einer Abdeckeinheit (20a; 20b; 20c), mit zumindest einer Befestigungseinheit (18a; 18b; 18c) zum Befestigen des Kettensägenschwerts (22a; 22b; 22c) und der Abdeckeinheit (20a; 20b; 20c) an der Antriebseinheit (14a; 14b; 14c) und/oder dem Gehäuse (16a; 16b; 16c) und mit zumindest einer Sicherungseinheit (24a; 24b; 24c), die dazu vorgesehen ist, die Befestigungseinheit (18a; 18b; 18c) zumindest teilweise an der Abdeckeinheit (20a; 20b; 20c) zu sichern, wobei die Sicherungseinheit (24a; 24b; 24c) als eine, insbesondere zumindest im Wesentlichen formschlussfreie, Kraftschlusseinheit, insbesondere als magnetische Einheit, ausgebildet ist, **dadurch gekennzeichnet, dass** die Sicherungseinheit (24a; 24b; 24c) zumindest ein Kraftschlusselement (26a; 26b; 26c) zu einer, insbesondere zumindest im Wesentlichen formschlussfreien, kraftschlüssigen Verbindung, insbesondere zu einer magnetischen Verbindung, mit zumindest einem Befestigungselement (28a; 28b; 28c) der Befestigungseinheit (18a; 18b; 18c) aufweist, wobei das Kraftschlusselement (26a; 26b; 26c) das Befestigungselement (28a; 28b; 28c) in einem an der Abdeckeinheit (20a; 20b; 20c), insbesondere einem Abdeckelement (30a; 30b; 30c) der Abdeckeinheit (20a; 20b; 20c), angeordneten Zustand des Befestigungselements (28a; 28b; 28c) zumindest segmentweise umgibt.

2. Befestigungsvorrichtung nach Anspruch 1, **dadurch gekennzeichnet, dass** die Sicherungseinheit (24a; 24b; 24c) zumindest ein Kraftschlusselement (26a; 26b; 26c) zu einer, insbesondere zumindest im Wesentlichen formschlussfreien, kraftschlüssigen Verbindung, insbesondere zu einer magnetischen Verbindung, mit zumindest einem Befestigungselement (28a; 28b; 28c) der Befestigungseinheit (18a; 18b; 18c) aufweist, wobei das Kraftschlusselement (26a; 26b; 26c) in die Abdeckeinheit (20a; 20b; 20c), insbesondere in einem an dem Kettensägenschwert (22a; 22b; 22c) anlegbaren Abdeckelement (30a; 30b; 30c) der Abdeckeinheit (20a; 20b; 20c), eingebettet ist, insbesondere mittels einer kraft- und/oder formschlüssigen Verbindung in einer Ausnehmung des Abdeckelements (30a; 30b; 30c) fixiert ist oder mittels einer stoffschlüssigen Verbindung einteilig mit dem Abdeckelement (30a; 30b; 30c) ausgebildet ist.

3. Befestigungsvorrichtung nach einem der vorhergehenden Ansprüche, **dadurch gekennzeichnet, dass** die Sicherungseinheit (24a; 24b; 24c) zumindest ein Kraftschlusselement (26a; 26b; 26c) zu einer, insbesondere zumindest im Wesentlichen formschlussfreien, kraftschlüssigen Verbindung, insbesondere zu einer magnetischen Verbindung, mit zumindest einem Befestigungselement (28a; 28b; 28c) der Befestigungseinheit (18a; 18b; 18c) aufweist, wobei das Kraftschlusselement (26a; 26b; 26c) kreisringförmig ausgebildet ist.

4. Befestigungsvorrichtung nach einem der vorhergehenden Ansprüche, **dadurch gekennzeichnet, dass** die Sicherungseinheit (24a; 24b; 24c) zumindest ein Kraftschlusselement (26a; 26b; 26c) zu einer, insbesondere zumindest im Wesentlichen formschlussfreien, kraftschlüssigen Verbindung, insbesondere zu einer magnetischen Verbindung, mit zumindest einem Befestigungselement (28a; 28b; 28c) der Befestigungseinheit (18a; 18b; 18c) aufweist, wobei das Befestigungselement (28a; 28b; 28c) einen Kraftschlussbereich (34a) und einen Befestigungsbereich (36a) umfasst, wobei eine Länge (40a) des Kraftschlussbereichs (34a) entlang einer Befestigungsachse (38a; 38b; 38c) der Befestigungseinheit (18a; 18b; 18c) größer ist als eine Länge (42a) des Befestigungsbereichs (36a).

5. Befestigungsvorrichtung nach einem der vorhergehenden Ansprüche, **dadurch gekennzeichnet, dass** die Sicherungseinheit (24a) zumindest ein zumindest teilweise als Magnet ausgebildetes Kraftschlusselement (26a) zu einer, insbesondere zumindest im Wesentlichen formschlussfreien, kraftschlüssigen Verbindung, insbesondere zu einer magnetischen Verbindung, mit zumindest einem Befestigungselement (28a) der Befestigungseinheit (18a) aufweist.

6. Befestigungsvorrichtung nach einem der vorhergehenden Ansprüche, **dadurch gekennzeichnet, dass** die Sicherungseinheit (24b; 24c) zumindest ein Kraftschlusselement (26b; 26c) zu einer, insbesondere zumindest im Wesentlichen formschlussfreien, kraftschlüssigen Verbindung, insbesondere zu einer magnetischen Verbindung, mit zumindest einem Befestigungselement (28b; 28c) der Befestigungseinheit (18b; 18c) aufweist, wobei das Kraftschlusselement (26b; 26c) zumindest in einem Kraftschlussbereich (44b; 44c) des Kraftschlusselements (26b; 26c) zumindest teilweise aus einem Kunststoff und/oder einem Gummi gebildet ist.

7. Befestigungsvorrichtung nach einem der vorhergehenden Ansprüche, **dadurch gekennzeichnet, dass** die Sicherungseinheit (24b; 24c) zumindest ein Kraftschlusselement (26b; 26c) zu einer, insbesondere zumindest im Wesentlichen formschlussfreien, kraftschlüssigen Verbindung, insbesondere zu einer magnetischen Verbindung, mit zumindest einem Befestigungselement (28b; 28c) der Befestigungseinheit (18b; 18c) aufweist, wobei das Kraftschlusselement (26b; 26c) an einer dem Befestigungselement (28b; 28c) zugewandten Seite zumindest im Wesentlichen konusförmig oder zumindest teilweise torusförmig ausgebildet ist.

8. Befestigungsvorrichtung nach einem der vorhergehenden Ansprüche, **dadurch gekennzeichnet, dass** die Sicherungseinheit (24a; 24b; 24c) zumindest ein Kraftschlusselement (26a; 26b; 26c) aufweist, das dazu vorgesehen ist, in zumindest einem unbefestigten Zustand der Befestigungseinheit (18a; 18b; 18c), insbesondere durch eine kraftschlüssige Verbindung, insbesondere eine magnetische Verbindung, mit zumindest einem an der Antriebseinheit (14a; 14b; 14c) und/oder dem Gehäuse (16a; 16b; 16c) angeordneten Befestigungselement (28a; 28b; 28c) der Befestigungseinheit (18a; 18b; 18c), das Kettensägenschwert (22a; 22b; 22c) unabhängig von der Abdeckeinheit (20a; 20b; 20c) in zumindest eine Richtung an der Antriebseinheit (14a; 14b; 14c) und/oder dem Gehäuse (16a; 16b; 16c) zu fixieren.

9. Kettensäge, mit zumindest einem Kettensägenschwert (22a; 22b; 22c), mit zumindest einer Antriebseinheit (14a; 14b; 14c) und/oder einem Gehäuse (16a; 16b; 16c) sowie mit zumindest einer Befestigungsvorrichtung (12a; 12b; 12c) nach einem der vorhergehenden Ansprüche zum Befestigen des Kettensägenschwerts (22a; 22b; 22c) an der Antriebseinheit (14a; 14b; 14c) und/oder dem Gehäuse (16a; 16b; 16c).

## Claims

1. Fastening device for fastening a chain-saw guide bar to a drive unit and/or a housing of a chainsaw, having at least one covering unit (20a; 20b; 20c), having at least one fastening unit (18a; 18b; 18c) for fastening the chain-saw guide bar (22a; 22b; 22c) and the covering unit (20a; 20b; 20c) to the drive unit (14a; 14b; 14c) and/or the housing (16a; 16b; 16c), and having at least one securing unit (24a; 24b; 24c) which is intended to secure the fastening unit (18a; 18b; 18c) at least partially to the covering unit (20a; 20b; 20c), wherein the securing unit (24a; 24b; 24c) is in the form of an, in particular at least substantially force-fit-free, force-fitting unit, in particular of a magnetic unit, **characterized in that** the securing unit (24a; 24b; 24c) has at least one force-fitting element (26a; 26b; 26c) for an, in particular at least substantially force-fit-free, force-fitting connection, in particular for a magnetic connection, to at least one fastening element (28a; 28b; 28c) of the fastening unit (18a; 18b; 18c), wherein the force-fitting element (26a; 26b; 26c) surrounds at least segments of the fastening element (28a; 28b; 28c) in a state of the fastening element (28a; 28b; 28c) in which it is arranged on the covering unit (20a; 20b; 20c), in particular on a covering element (30a; 30b; 30c) of the covering unit (20a; 20b; 20c) .

2. Fastening device according to Claim 1, **characterized in that** the securing unit (24a; 24b; 24c) has at least one force-fitting element (26a; 26b; 26c) for an, in particular at least substantially form-fit-free, force-fitting connection, in particular for a magnetic connection, to at least one fastening element (28a; 28b; 28c) of the fastening unit (18a; 18b; 18c), wherein the force-fitting element (26a; 26b; 26c) is embedded in the covering unit (20a; 20b; 20c), in particular in a covering element (30a; 30b; 30c), able to be placed against the chain-saw guide bar (22a; 22b; 22c), of the covering unit (20a; 20b; 20c), in particular is fixed by means of a force- and/or form-fitting connection in a recess of the covering element (30a; 30b; 30c) or is formed integrally with the covering element (30a; 30b; 30c) by means of a materially integral connection.

3. Fastening device according to either of the preceding claims, **characterized in that** the securing unit (24a; 24b; 24c) has at least one force-fitting element (26a; 26b; 26c) for an, in particular at least substantially form-fit-free, force-fitting connection, in particular for a magnetic connection, to at least one fastening element (28a; 28b; 28c) of the fastening unit (18a; 18b; 18c), wherein the force-fitting element (26a; 26b; 26c) is formed in a circular manner.

4. Fastening device according to one of the preceding claims, **characterized in that** the securing unit (24a; 24b; 24c) has at least one force-fitting element (26a; 26b; 26c) for an, in particular at least substantially form-fit-free, force-fitting connection, in particular for a magnetic connection, to at least one fastening element (28a; 28b; 28c) of the fastening unit (18a; 18b; 18c), wherein the fastening element (28a; 28b; 28c) comprises a force-fitting region (34a) and a fastening region (36a), wherein a length (40a) of the force-fitting region (34a) along a fastening axis (38a; 38b; 38c) of the fastening unit (18a; 18b; 18c) is greater than a length (42a) of the fastening region (36a).

5. Fastening device according to one of the preceding claims, **characterized in that** the securing unit (24a) has at least one force-fitting element (26a), at least partially in the form of a magnet, for an, in particular at least substantially form-fit-free, force-fitting connection, in particular for a magnetic connection, to at least one fastening element (28a) of the fastening unit (18a).

6. Fastening device according to one of the preceding claims, **characterized in that** the securing unit (24b; 24c) has at least one force-fitting element (26b; 26c) for an, in particular at least substantially form-fit-free, force-fitting connection, in particular for a magnetic connection, to at least one fastening element (28b; 28c) of the fastening unit (18b; 18c), wherein the force-fitting element (26b; 26c) is formed at least partially from a plastic and/or a rubber at least in a force-fitting region (44b; 44c) of the force-fitting element (26b; 26c).

7. Fastening device according to one of the preceding claims, **characterized in that** the securing unit (24b; 24c) has at least one force-fitting element (26b; 26c) for an, in particular at least substantially form-fit-free, force-fitting connection, in particular for a magnetic connection, to at least one fastening element (28b; 28c) of the fastening unit (18b; 18c), wherein the force-fitting element (26b; 26c) is formed at least substantially conically or at least partially toroidally on a side facing the fastening element (28b; 28c).

8. Fastening device according to one of the preceding claims, **characterized in that** the securing unit (24a; 24b; 24c) has at least one force-fitting element (26a; 26b; 26c), which is intended, in at least one unfastened state of the fastening unit (18a; 18b; 18c), to fix the chain-saw guide bar (22a; 22b; 22c) to the drive unit (14a; 14b; 14c) and/or to the housing (16a; 16b; 16c) in at least one direction independently of the covering unit (20a; 20b; 20c), in particular by way of a force-fitting connection, in particular a magnetic connection, to at least one fastening element (28a; 28b; 28c), arranged on the drive unit (14a; 14b; 14c) and/or on the housing (16a; 16b; 16c), of the fastening unit (18a; 18b; 18c).

9. Chain saw having at least one chain-saw guide bar (22a; 22b; 22c), having at least one drive unit (14a; 14b; 14c) and/or one housing (16a; 16b; 16c), and having at least one fastening device (12a; 12b; 12c) according to one of the preceding claims for fastening the chain-saw guide bar (22a; 22b; 22c) to the drive unit (14a; 14b; 14c) and/or to the housing (16a; 16b; 16c).

## Revendications

1. Dispositif de fixation permettant de fixer un guide-chaîne à une unité d'entraînement et/ou à un carter d'une scie à chaîne, comportant au moins une unité de couvercle (20a ; 20b ; 20c), comportant au moins une unité de fixation (18a ; 18b ; 18c) permettant de fixer le guide-chaîne (22a ; 22b ; 22c) et l'unité de couvercle (20a ; 20b ; 20c) à l'unité d'entraînement (14a ; 14b ; 14c) et/ou au carter (16a ; 16b ; 16c) et comportant au moins une unité de blocage (24a ; 24b ; 24c), qui est prévue pour bloquer l'unité de fixation (18a ; 18b ; 18c) au moins partiellement sur l'unité de couvercle (20a ; 20b ; 20c), l'unité de blocage (24a ; 24b ; 24c) étant réalisée sous la forme d'une unité d'engagement par force, en particulier au moins sensiblement sans engagement par complémentarité de formes, en particulier sous forme d'unité magnétique,
**caractérisé en ce que** l'unité de blocage (24a ; 24b ; 24c) comprend au moins un élément d'engagement par force (26a ; 26b ; 26c) pour une liaison par engagement par force, en particulier au moins sensiblement sans engagement par complémentarité de formes, en particulier pour une liaison magnétique, avec au moins un élément de fixation (28a ; 28b ; 28c) de l'unité de fixation (18a ; 18b ; 18c), l'élément d'engagement par force (26a ; 26b ; 26c) entourant au moins par segments l'élément de fixation (28a ; 28b ; 28c) dans un état de l'élément de fixation (28a ; 28b ; 28c) disposé sur l'unité de couvercle (20a ; 20b ; 20c), en particulier sur un élément de couvercle (30a ; 30b ; 30c) de l'unité de couvercle (20a ; 20b ; 20c).

2. Dispositif de fixation selon la revendication 1, **caractérisé en ce que** l'unité de blocage (24a ; 24b ; 24c) comprend au moins un élément d'engagement par force (26a ; 26b ; 26c) pour une liaison par engagement par force, en particulier au moins sensiblement sans engagement par complémentarité de formes, en particulier pour une liaison magnétique, avec au moins un élément de fixation (28a ; 28b ; 28c) de l'unité de fixation (18a ; 18b ; 18c), l'élément d'engagement par force (26a ; 26b ; 26c) étant encastré dans l'unité de couvercle (20a ; 20b ; 20c), en particulier dans un élément de couvercle de l'unité de couvercle (20a ; 20b ; 20c), lequel élément de couvercle (30a ; 30b ; 30c) peut être appliqué contre le guide-chaîne (22a ; 22b ; 22c), en particulier étant fixé au moyen d'une liaison par engagement par force et/ou par complémentarité de formes dans un évidement de l'élément de couvercle (30a ; 30b ; 30c) ou étant réalisé d'une seule pièce avec l'élément de couvercle (30a ; 30b ; 30c) par une liaison de matière.

3. Dispositif de fixation selon l'une des revendications précédentes, **caractérisé en ce que** l'unité de blocage (24a ; 24b ; 24c) comprend au moins un élément d'engagement par force (26a ; 26b ; 26c) pour une liaison par engagement par force, en particulier au moins sensiblement sans engagement par complémentarité de formes, en particulier pour une liaison magnétique, avec au moins un élément de fixation (28a ; 28b ; 28c) de l'unité de fixation (18a ; 18b ; 18c), l'élément d'engagement par force (26a ; 26b ; 26c) étant réalisé sous forme annulaire circulaire.

4. Dispositif de fixation selon l'une des revendications précédentes, **caractérisé en ce que** l'unité de blocage (24a ; 24b ; 24c) comprend au moins un élément d'engagement par force (26a ; 26b ; 26c) pour une liaison par engagement par force, en particulier au moins sensiblement sans engagement par complémentarité de formes, en particulier pour une liaison magnétique, avec au moins un élément de fixation (28a ; 28b ; 28c) de l'unité de fixation (18a ; 18b ; 18c), l'élément de fixation (28a ; 28b ; 28c) comportant une région d'engagement par force (34a) et une région de fixation (36a), une longueur (40a) de la région d'engagement par force (34a) le long d'un axe de fixation (38a ; 38b ; 38c) de l'unité de fixation (18a ; 18b ; 18c) étant supérieure à une longueur (42a) de la région de fixation (36a) .

5. Dispositif de fixation selon l'une des revendications précédentes, **caractérisé en ce que** l'unité de blocage (24a) comprend au moins un élément d'engagement par force (26a) réalisé au moins partiellement sous forme d'aimant, pour une liaison par engagement par force, en particulier au moins sensiblement sans engagement par complémentarité de formes, en particulier pour une liaison magnétique, avec au moins un élément de fixation (28a) de l'unité de fixation (18a).

6. Dispositif de fixation selon l'une des revendications précédentes, **caractérisé en ce que** l'unité de blocage (24b ; 24c) comprend au moins un élément d'engagement par force (26b ; 26c), pour une liaison par engagement par force, en particulier au moins sensiblement sans engagement par complémentarité de formes, en particulier pour une liaison magnétique, avec au moins un élément de fixation (28b ; 28c) de l'unité de fixation (18b ;18c), l'élément d'engagement par force (26b ; 26c) étant formé au moins partiellement à partir d'une matière synthétique et/ou d'un caoutchouc au moins dans une région d'engagement par force (44b ; 44c) de l'élément d'engagement par force (26b ; 26c).

7. Dispositif de fixation selon l'une des revendications précédentes, **caractérisé en ce que** l'unité de blocage (24b ; 24c) comprend au moins un élément d'engagement par force (26b ; 26c), pour une liaison par engagement par force, en particulier au moins sensiblement sans engagement par complémentarité de formes, en particulier pour une liaison magnétique, avec au moins un élément de fixation (28b ; 28c) de l'unité de fixation (18b ;18c), l'élément d'engagement par force (26b ; 26c) étant réalisé au moins sensiblement sous forme conique ou au moins partiellement sous forme toroïdale sur un côté tourné vers l'élément de fixation (28b ; 28c).

8. Dispositif de fixation selon l'une des revendications précédentes, **caractérisé en ce que** l'unité de blocage (24a ; 24b ; 24c) comprend au moins un élément d'engagement par force (26a ; 26b ; 26c) qui est prévu pour fixer le guide-chaîne (22a ; 22b ; 22c) sur l'unité d'entraînement (14a ; 14b ; 14c) et/ou le carter (16a ; 16b ; 16c) dans au moins une direction indépendamment de l'unité de couvercle (20a ; 20b ; 20c) dans au moins un état non fixé de l'unité de fixation (18a ; 18b ; 18c), en particulier par une liaison par engagement par force, en particulier une liaison magnétique, avec au moins un élément de fixation (28a ; 28b ; 28c), disposé sur l'unité d'entraînement (14a ; 14b ; 14c) et/ou le carter (16a ; 16b ; 16c), de l'unité de fixation (18a ; 18b ; 18c).

9. Scie à chaîne, comportant au moins un guide-chaîne (22a ; 22b ; 22c), comportant au moins une unité d'entraînement (14a ; 14b ; 14c) et/ou un carter (16a ; 16b ; 16c) et comportant au moins un dispositif de fixation (12a ; 12b ; 12c) selon l'une des revendications précédentes permettant de fixer le guide-chaîne (22a ; 22b ; 22c) à l'unité d'entraînement (14a ; 14b ; 14c) et/ou au carter (16a ; 16b ; 16c).
